# FASCICULE DE BREVET EUROPEEN

(11) **EP 3 085 114 B1**
(45) Date de publication et mention de la délivrance du brevet: **01.05.2019**
(21) Numéro de dépôt: 14805635.1
(22) Date de dépôt: 02.12.2014
(51) Int. Cl.: H04S 7/00, H04M 1/03, G10K 11/08, H04M 1/04, H04M 1/60

(54) **SYSTÈME COMPRENANT UN APPAREIL ÉLECTRONIQUE ET UN SUPPORT**
SYSTEM MIT EINEM ELEKTRONISCHEN GERÄT UND EINEM STÄNDER
SYSTEM COMPRISING AN ELECTRONIC DEVICE AND A SUPPORT STAND

(30) Priorité: 19.12.2013 FR 1363121
(43) Date de publication de la demande: 26.10.2016
(73) Titulaire: SAGEMCOM BROADBAND SAS, 92500 Rueil Malmaison (FR)
(72) Inventeur: BOURGOIN, Gilles, 92500 RUEIL MALMAISON (FR)
(74) Mandataire: Lavialle, Bruno François Stéphane
(86) Numéro de dépôt international: PCT/EP2014/076321
(87) Numéro de publication internationale: WO 2015/090948

(56) Documents cités:
- EP-A1- 2 621 150
- WO-A1-2005/091601
- US-A1- 2009 196 440

## Description

L'invention concerne un système comprenant un appareil électronique et un support destiné à accueillir l'appareil électronique.

### ARRIERE PLAN DE L'INVENTION

De nombreux appareils électroniques portables comportent un haut-parleur intégré : téléphone portable, téléphone résidentiel sans fil, tablette, etc.

Dans un tel appareil électronique, le haut-parleur intégré est destiné à être utilisé principalement pour restituer et diffuser un signal sonore quelconque (musique, etc.) sans qu'il soit nécessaire de connecter des écouteurs, des enceintes ou un haut-parleur externe à l'appareil électronique, ou bien pour mettre en oeuvre une fonction de téléphonie « mains libres » permettant de téléphoner sans l'usage des mains et de faire participer un interlocuteur supplémentaire à une conversation.

Le haut-parleur intégré d'un tel appareil électronique est généralement agencé pour diffuser le signal sonore au travers d'une face arrière de l'appareil, ce qui pose un certain nombre de problèmes.

De manière générale, lorsque l'appareil électronique est posé sur un meuble (table, étagère, etc.) en ayant sa face arrière en contact avec le meuble, la restitution sonore est relativement mauvaise.

Dans le cas d'un téléphone résidentiel sans fil, qui est par ailleurs équipé d'un microphone agencé pour recevoir un signal sonore au travers d'une face avant de l'appareil, la fonction mains libres est utilisée la plupart du temps par un utilisateur en positionnant le téléphone dans une position verticale, et en se plaçant devant la face avant du téléphone pour parler dans le microphone. Le signal sonore est donc diffusé par le haut-parleur intégré principalement vers l'arrière du téléphone et non vers l'utilisateur, ce qui dégrade la restitution sonore en réduisant le niveau sonore perçu. De plus, la qualité de la restitution sonore est difficilement prédictible car elle dépend fortement de la position et de l'environnement du téléphone résidentiel, ce qui rend une correction de cette restitution sonore difficile à réaliser. Le document WO 2005/091601 A1 montre un système de téléphone portable et un support de chargement avec une surface de réflexion acoustique.

### OBJET DE L'INVENTION

L'invention a pour objet d'améliorer le niveau sonore et la restitution sonore d'un signal sonore diffusé par un appareil électronique muni d'un haut-parleur intégré.

### RESUME DE L'INVENTION

En vue de la réalisation de ce but, on propose un système comprenant un appareil électronique et un support destiné à accueillir l'appareil électronique dans une position d'accueil selon la revendication 1 et un appareil électronique correspondant selon la revendication 7. D'autres modes de réalisation de l'invention sont définis dans les revendications dépendantes. Selon l'invention, les moyens de traitement sont adaptés à égaliser le premier signal sonore selon des premiers paramètres d'égalisation lorsque les moyens de détection détectent que l'appareil électronique est dans la position d'accueil.

Ainsi, lorsque l'appareil électronique est accueilli par le support dans la position d'accueil, les premières ondes acoustiques correspondant au premier signal sonore sont au moins partiellement réfléchies par la surface de réflexion, ce qui augmente le niveau sonore du premier signal sonore perçu par un utilisateur de l'appareil électronique. De plus, les moyens de détection détectent que l'appareil électronique se trouve dans ladite position d'accueil, et les moyens de traitement égalisent le premier signal sonore selon les premiers paramètres d'égalisation qui sont avantageusement définis pour pallier à d'éventuels défauts acoustiques générés par le support et impactant la restitution sonore du premier signal sonore. Comme le support présente des caractéristiques géométriques connues, les défauts acoustiques sont prédictibles et la restitution sonore peut être corrigée efficacement.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 représente schématiquement le système de l'invention, ainsi qu'un utilisateur utilisant le système dans une application de téléphonie résidentielle au cours d'une conversation mains libres avec un interlocuteur ;
- la figure 2 est un graphique illustrant un niveau sonore (en décibels, en fonction de la fréquence en hertz) perçu par l'utilisateur lorsqu'un téléphone résidentiel est dans une position verticale en champs libre, et un niveau sonore perçu par l'utilisateur lorsque le téléphone résidentiel est dans la position d'accueil ;
- la figure 3 est un graphique illustrant les premiers paramètres d'égalisation utilisés pour corriger le niveau sonore représenté à la figure 2 lorsque le téléphone résidentiel est dans la position d'accueil ;
- la figure 4 est un graphique illustrant les niveaux sonores de la figure 2, ainsi que le niveau sonore corrigé par les premiers paramètres d'égalisation de la figure 3 et perçu par l'utilisateur lorsque le téléphone résidentiel est dans la position d'accueil.

### DESCRIPTION DETAILLEE DE L'INVENTION

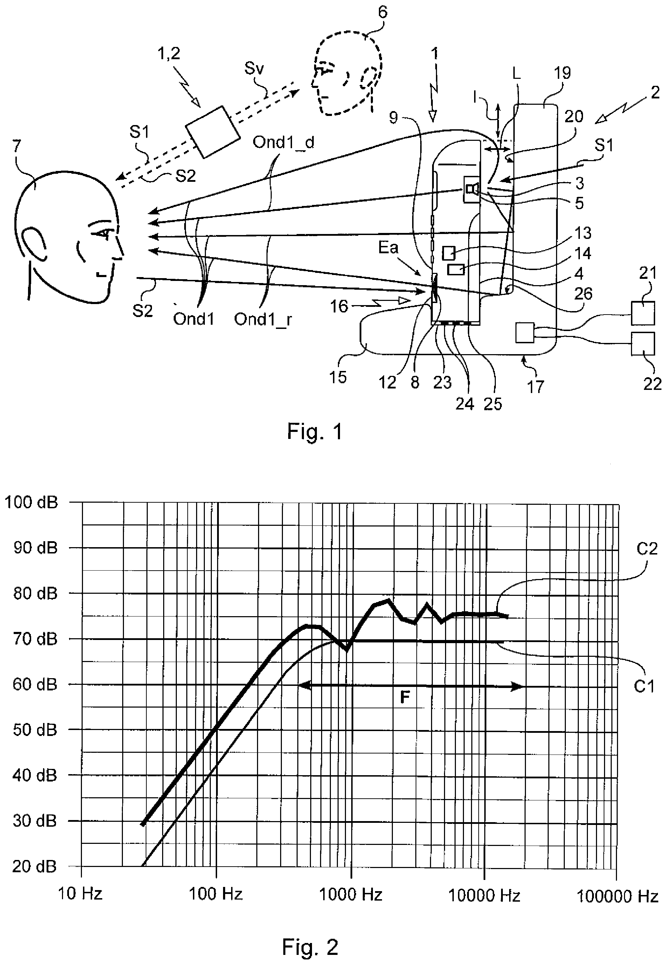

L'invention concerne un système comprenant un appareil électronique 1 et un support 2 destiné à accueillir l'appareil électronique dans une position d'accueil. En référence à la figure 1, l'invention est ici illustrée dans une application de téléphonie résidentielle. L'appareil électronique est ici un téléphone résidentiel sans fil 1 adapté à réaliser une fonction mains libres, et le support accueillant le téléphone résidentiel est une base de chargement 2 dudit téléphone résidentiel 1.

Le téléphone résidentiel 1 comporte un organe de diffusion pour émettre un premier signal sonore S1 et un organe de réception pour recevoir un deuxième signal sonore S2.

L'organe de diffusion est en l'occurrence un haut-parleur intégré 3 agencé dans le téléphone résidentiel 1 pour diffuser le premier signal sonore S1 à travers une face arrière 4 du téléphone résidentiel 1. La face arrière 4 du téléphone résidentiel 1 comporte à cet effet un orifice de diffusion 5 situé en regard d'une surface externe du haut-parleur 3. Le premier signal sonore S1 est ici une restitution d'un signal vocal Sv généré par un interlocuteur 6 avec lequel un utilisateur 7 du téléphone résidentiel 1 tient une conversation.

L'organe de réception est en l'occurrence un microphone intégré 8 agencé dans le téléphone résidentiel 1 pour acquérir le deuxième signal sonore S2 à travers une face avant 9 du téléphone résidentiel 1. La face avant 9 du téléphone résidentiel 1 comporte à cet effet un orifice d'acquisition 12 situé en regard d'une surface externe du microphone 8. Le deuxième signal sonore S2 est un signal vocal généré par l'utilisateur 7 à destination de l'interlocuteur 6 au cours de la conversation.

Outre ce haut-parleur 3 et ce microphone 8, le téléphone résidentiel 1 comporte des moyens de traitement 13 reliés au haut-parleur 3 et au microphone 8, et des moyens de détection 14. Les moyens de traitement 13 comportent très classiquement une carte électrique sur laquelle sont montés un certain nombre de composant électroniques à même de réaliser des traitements sur le premier signal sonore S1 et sur le deuxième signal sonore S2. On trouve ici, parmi ces composants électroniques, un processeur, des composants de mémoire, des composants d'alimentation, des composants de conversion analogique numérique et numérique analogique, etc.

La base de chargement 2, quant à elle, est formée d'une première partie 15, formant socle, dont la forme définit un réceptacle d'accueil 16 du téléphone résidentiel 1 et une surface sensiblement plane 17 permettant de poser la base de chargement 2 sur un meuble quelconque, et d'une deuxième partie 19 dont la forme définit une surface de réflexion 20 d'ondes acoustiques.

La première partie 15 de la base de chargement 2 est classiquement reliée à une prise secteur 21 ainsi qu'à un réseau téléphonique 22. Le réceptacle d'accueil 16 est destiné à accueillir le téléphone résidentiel 1 de sorte que celui-ci soit disposé verticalement sur la base de chargement 2. La forme du réceptacle d'accueil 16 et celle du téléphone résidentiel 1 sont complémentaires et définissent une unique position d'accueil du téléphone résidentiel 1 sur la base de chargement 2.

Le réceptacle d'accueil 16 a un fond 23 duquel débouchent deux éléments conducteurs de puissance 24 qui sont utilisés pour transmettre une énergie électrique au téléphone résidentiel 1 depuis la base de chargement 2 pour le rechargement en énergie électrique du téléphone résidentiel 1 lorsque celui-ci est dans la position d'accueil. Le réceptacle d'accueil 16 comporte de plus en son fond 23 un élément conducteur de détection 25 qui, lorsque le téléphone résidentiel 1 vient en position d'accueil, coopère avec un élément complémentaire du téléphone résidentiel 1 de manière à modifier un état électrique à l'intérieur du téléphone résidentiel 1. Cette modification d'état électrique est détectée par les moyens de détection 14 du téléphone résidentiel 1, qui détectent ainsi que le téléphone résidentiel 1 est dans la position d'accueil.

La surface de réflexion 20, quant à elle, est disposée généralement perpendiculairement à la surface sensiblement plane 17 de la première partie 15 de la base de chargement 2. La surface de réflexion 20 est ici une surface rectangulaire sensiblement plane qui est plus large d'environ trente millimètres que la face arrière 4 du téléphone résidentiel 1 et plus longue d'une longueur l d'environ 30 millimètres que la face arrière 4 du téléphone résidentiel 1.

La position d'accueil du téléphone résidentiel 1 est telle que, lorsque le téléphone résidentiel 1 se trouve dans cette position d'accueil, la surface de réflexion 20 est agencée de manière à réfléchir au moins partiellement des premières ondes acoustiques Ond1 correspondant au premier signal sonore S1 émis par le téléphone résidentiel 1 et diffusé par le haut-parleur 3. Ici, la face arrière 4 du téléphone résidentiel 1 est en regard de la surface de réflexion 20 et est sensiblement parallèle à celle-ci, à une distance L égale à environ cinq millimètres de la surface de réflexion 20. Le haut-parleur 3 du téléphone résidentiel 1 est donc lui aussi en regard de la surface de réflexion 20.

On décrit maintenant plus en détail le comportement acoustique du système de l'invention.

Au cours de sa conversation avec l'interlocuteur 6, l'utilisateur 7 qui utilise la fonction mains libres perçoit une partie des premières ondes acoustiques Ond1 correspondant au premier signal sonore S1. En particulier, lorsque le téléphone résidentiel 1 est placé dans le réceptacle d'accueil 16 et se trouve donc dans la position d'accueil, l'utilisateur 7 perçoit des premières ondes directes Ond1_d et des premières ondes réfléchies Ond1_r. Les premières ondes directes Ond1_d résultent d'une transmission partielle directe des premières ondes acoustiques Ond1 depuis le haut-parleur 3 vers l'utilisateur 7. Les premières ondes réfléchies Ond1_r résultent d'une réflexion des premières ondes acoustiques Ond1 sur la surface de réflexion 20 uniquement ou bien sur la surface de réflexion 20 puis sur une surface supérieure 26 de la première partie 15 de la base de chargement 2.

Le niveau sonore du premier signal sonore S1 perçu par l'utilisateur 7 est ainsi amélioré, du fait de la superposition des premières ondes directes Ond1_d et des premières ondes réfléchies Ond1_r.

Cependant, les premières ondes réfléchies Ond1_r sont perçues par l'utilisateur 7 avec un certain retard par rapport à la perception des premières ondes directes Ond1_d, ledit retard étant dû au chemin acoustique plus long que ces premières ondes réfléchies Ond1_r doivent parcourir pour parvenir à l'utilisateur 7. Ce retard se traduit par un déphasage présenté par les premières ondes réfléchies Ond1_r. A cause de ce déphasage, les premières ondes directes Ond1_d et les premières ondes réfléchies Ond1_r sont en opposition de phase et s'annulent à certaines fréquences.

Cet effet est bien visible sur la figure 2. La courbe C1 représente un niveau sonore perçu par l'utilisateur 7 situé à une certaine distance D du téléphone résidentiel 1 lorsque le téléphone résidentiel 1 est dans une position verticale en champs libre, c'est-à-dire lorsqu'aucun obstacle acoustique ne s'étend à proximité du téléphone résidentiel 1. La courbe C2 représente un niveau sonore équivalent lorsque le téléphone résidentiel 1 se trouve dans la position d'accueil. On constate que le niveau sonore de la courbe C2 est plus élevé de manière générale que celui de la courbe C1. Cependant, on constate aussi que la restitution sonore de la courbe C2 est dégradée et accidentée sur un domaine fréquentiel F correspondant à une partie normalement plane de la courbe C1.

Pour corriger ce phénomène, des premiers paramètres d'égalisation P1 sont stockés dans les moyens de traitement 13. Ces premiers paramètres d'égalisation P1 sont définis en fonction de caractéristiques géométriques de la base de chargement 2 et du téléphone résidentiel 1. On trouve par exemple parmi ces caractéristiques géométriques la surface, la hauteur, la largeur de la surface de réflexion 20, la distance L entre la face arrière 4 du téléphone résidentiel 1 et la surface de réflexion 20, la différence de longueur l et de largeur entre la surface de réflexion 20 et la face arrière 4 du téléphone résidentiel 1, la hauteur et la largeur de la face arrière 4 du téléphone résidentiel 1, etc.

Ainsi, lorsque les moyens de détection 14 détectent que le téléphone résidentiel 1 est dans la position d'accueil, les moyens de détection 14 transmettent cette information aux moyens de traitement 13 qui égalisent de manière automatique le premier signal sonore S1 en utilisant les premiers paramètres d'égalisation P1.

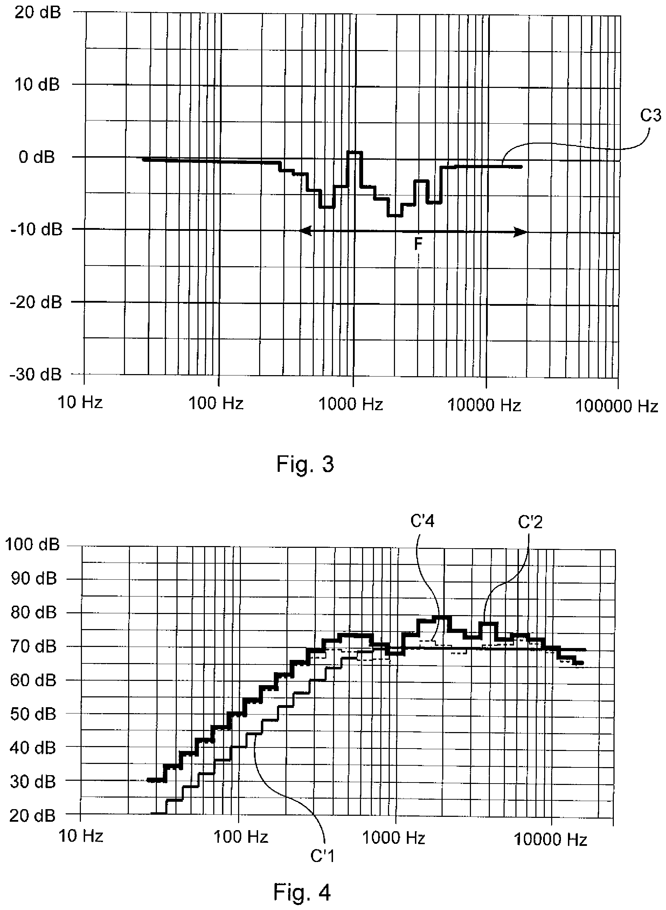

La courbe C3, visible sur la figure 3, correspond à des niveaux d'égalisation appliqués dans la situation de la figure 2. On constate que cette égalisation présente un gain proche de zéro décibel à basse fréquence, et un gain généralement négatif au niveau du domaine fréquentiel F correspondant à la partie normalement plane de la courbe C1.

Sur la figure 4, les courbes C'1 et C'2 sont des courbes équivalentes aux courbes C1 et C2 de la figure 1, et la courbe C'4 représente le niveau sonore perçu par l'utilisateur 7 lorsque celui-ci se trouve à la certaine distance D du téléphone résidentiel, lorsque le téléphone résidentiel 1 est en position d'accueil, et lorsque les moyens de traitement 13 égalisent de manière automatique le premier signal sonore S1. On constate bien sur cette figure 3 que l'égalisation réalisée permet, d'une part, d'augmenter le niveau sonore des basses fréquences, et d'autre part, de conserver une bonne restitution sonore des fréquences plus élevées.

Lorsque le premier signal sonore S1 est diffusé par le haut-parleur 3, on note que les premières ondes directes Ond1_d et les premières ondes réfléchies Ond1_r sont aussi perçues partiellement au niveau du microphone 8 du téléphone résidentiel 1, et retransmises à l'interlocuteur 7 via le microphone 8 et le réseau téléphonique 22, comme s'il s'agissait d'ondes générées par l'utilisateur 6. Ce phénomène produit donc un écho acoustique Ea mélangé au deuxième signal sonore S2.

Pour corriger ce phénomène, des paramètres de correction nominaux Pcn sont classiquement stockés dans les moyens de traitement 13. Or, cet écho acoustique Ea est sensiblement différent lorsque le téléphone résidentiel 1 est dans la position d'accueil, d'une part, à cause des caractéristiques géométriques et acoustiques de la base de chargement 2 et, d'autre part, à cause du fait que le niveau sonore à basse fréquence est augmenté grâce à l'égalisation décrite plus tôt.

Les moyens de traitement 13 sont donc ici adaptés à modifier les paramètres de correction nominaux Pcn pour tenir compte du fait que le téléphone résidentiel 1 est dans la position d'accueil.

Des paramètres de correction optimisés Pco sont stockés à cet effet dans les moyens de traitement 13. Lorsque les moyens de détection 14 détectent que le téléphone résidentiel 1 est dans la position d'accueil, les moyens de détection 14 transmettent cette information aux moyens de traitement 13 qui modifient les paramètres de correction en remplaçant les paramètres de correction nominaux Pcn par les paramètres de correction optimisés Pco et en corrigeant le deuxième signal sonore S2 en utilisant les paramètres de correction optimisés Pco.

L'invention n'est pas limitée au mode de mise en oeuvre particulier qui vient d'être décrit, mais, bien au contraire, couvre toute variante entrant dans le cadre de l'invention telle que définie par les revendications.

Bien que l'on ait ici décrit que le haut-parleur est agencé dans le téléphone résidentiel pour diffuser le premier signal sonore à travers une face arrière du téléphone résidentiel, il est possible de prévoir que l'organe de diffusion soit agencé de sorte que le premier signal sonore soit diffusé au travers d'une tranche latérale, supérieure ou inférieure de l'appareil électronique, et même au travers de la face avant dudit appareil électronique. La surface de réflexion doit bien sûr toujours être agencée de manière à réfléchir au moins partiellement les premières ondes acoustiques correspondant au premier signal sonore. Dans le cas, par exemple, où le signal sonore est diffusé au travers de la tranche supérieure d'un appareil électronique et où la surface de réflexion est une surface plane verticale, une position d'accueil acceptable consiste en un positionnement de l'appareil électronique vertical et légèrement penché vers la surface de réflexion.

Il est par ailleurs possible de prévoir que l'organe de réception soit agencé pour acquérir le deuxième signal sonore au travers d'une tranche latérale, supérieure ou inférieure de l'appareil électronique, et même au travers de la face arrière dudit appareil électronique.

On a indiqué que les premiers paramètres d'égalisation sont utilisés par les moyens de traitement pour égaliser le premier signal sonore lorsque les moyens de détection détectent que le téléphone résidentiel se trouve dans la position d'accueil. Il est bien évidemment possible de prévoir également que les moyens de traitement sont adaptés à égaliser le premier signal sonore selon des deuxièmes paramètres d'égalisation prédéfinis lorsque les moyens de détection ne détectent pas que le téléphone résidentiel est dans la position d'accueil.

Bien que l'on ait fourni des valeurs numériques relatives à des caractéristiques géométriques de la base de chargement et du téléphone résidentiel, l'invention est bien sûr applicable à un appareil électronique et à un support présentant des caractéristiques géométriques différentes. Par exemple, on a cité que la distance entre la face arrière du téléphone résidentiel et la surface de réflexion est égale à environ cinq millimètres, mais cette distance peut être différente. On observe notamment qu'une distance comprise entre 2 et 8 millimètres fournit d'excellents résultats.

De même, la surface de réflexion du support n'est ni nécessairement rectangulaire ni nécessairement plane, et n'est pas nécessairement perpendiculaire à une surface plane du support.

L'ensemble des courbes fournies ainsi que les niveaux sonores représentés le sont bien sûr à titre purement illustratif.

## Revendications

1. Système comprenant un appareil électronique (1) et un support (2) destiné à accueillir l'appareil électronique (1) dans une position d'accueil, le support étant une base de chargement agencée pour recharger en énergie électrique l'appareil électronique lorsque celui-ci se trouve dans la position d'accueil, l'appareil électronique (1) comportant des moyens de traitement (13) reliés à un organe de diffusion (3) pour émettre un premier signal sonore (S1) et des moyens de détection (14) adaptés à détecter si l'appareil électronique (1) se trouve ou non dans la position d'accueil, le support (2) comportant une surface de réflexion (20) d'ondes acoustiques émises par l'appareil électronique (1), la surface de réflexion (20) étant agencée de manière à réfléchir au moins partiellement des premières ondes acoustiques correspondant au premier signal sonore lorsque l'appareil électronique se trouve dans la position d'accueil,
**caractérisé en ce que** les moyens de traitement (13) sont adaptés à égaliser le premier signal sonore (S1) selon des premiers paramètres d'égalisation lorsque les moyens de détection (14) détectent que l'appareil électronique (1) est dans la position d'accueil.

2. Système selon la revendication 1, dans lequel les premiers paramètres d'égalisation sont prédéfinis en fonction de caractéristiques géométriques du support.

3. Système selon l'une des revendications précédentes, dans lequel les moyens de traitement (13) sont adaptés à égaliser le premier signal sonore (S1) selon des deuxièmes paramètres d'égalisation prédéfinis lorsque les moyens de détection (14) ne détectent pas que l'appareil électronique (1) est dans la position d'accueil.

4. Système selon l'une des revendications précédentes, dans lequel l'appareil électronique (1) comporte en outre un organe de réception (8) d'un deuxième signal sonore (S2), et dans lequel les moyens de traitement (13) sont en outre adaptés à modifier des paramètres de correction d'un écho acoustique généré par réception partielle du premier signal sonore (S1) par l'organe de réception (8) et mélangé au deuxième signal sonore.

5. Système selon l'une des revendications précédentes, dans lequel l'organe de diffusion (3) est agencé pour diffuser le premier signal sonore (S1) à travers une face (4) de l'appareil électronique (1), et dans lequel, lorsque l'appareil électronique (1) se trouve dans la position d'accueil, ladite face est située à une distance de la surface de réflexion (20) comprise entre 2 et 8 millimètres.

6. Système selon la revendication 5, dans lequel la surface de réflexion (20) est plus large d'environ 30 millimètres que la face (4) de l'appareil électronique (1) et plus longue d'environ 30 millimètres que la face (4) de l'appareil électronique (1).

7. Appareil électronique agencé pour être positionné dans une position d'accueil d'une base de chargement pour son rechargement en énergie électrique, l'appareil électronique (1) comportant des moyens de traitement (13) reliés à un organe de diffusion (3) pour émettre un premier signal sonore (S1) et des moyens de détection (14) adaptés à détecter si l'appareil électronique (1) se trouve ou non dans la position d'accueil, **caractérisé en ce que** les moyens de traitement (13) sont adaptés à égaliser le premier signal sonore (S1) selon des premiers paramètres d'égalisation lorsque les moyens de détection (14) détectent que l'appareil électronique (1) est dans la position d'accueil.

8. Appareil électronique selon la revendication 7, dans lequel les premiers paramètres d'égalisation sont prédéfinis en fonction de caractéristiques géométriques du support.

9. Appareil électronique selon la revendication 7, dans lequel les moyens de traitement (13) sont adaptés à égaliser le premier signal sonore (S1) selon des deuxièmes paramètres d'égalisation prédéfinis lorsque les moyens de détection (14) ne détectent pas que l'appareil électronique (1) est dans la position d'accueil.

10. Appareil électronique selon la revendication 7, dans lequel l'appareil électronique (1) comporte en outre un organe de réception (8) d'un deuxième signal sonore (S2), et dans lequel les moyens de traitement (13) sont en outre adaptés à modifier des paramètres de correction d'un écho acoustique généré par réception partielle du premier signal sonore (S1) par l'organe de réception (8) et mélangé au deuxième signal sonore.

11. Appareil électronique selon la revendication 7, l'appareil électronique étant un téléphone résidentiel sans fil.

## Patentansprüche

1. System, umfassend ein elektronisches Gerät (1) und einen Ständer (2), der dazu bestimmt ist, das elektronische Gerät (1) in einer Aufnahmeposition aufzunehmen, wobei der Ständer eine Ladebasis ist, die ausgebildet ist, um das elektronische Gerät wieder mit elektrischer Energie zu laden, wenn sich dieses in der Aufnahmeposition befindet, wobei das elektronische Gerät (1) Verarbeitungsmittel (13) umfasst, die mit einem Sendeorgan (3) verbunden sind, um ein erstes Tonsignal (S1) auszusenden, sowie Erfassungsmittel (14), die geeignet sind zu erfassen, ob sich das elektronische Gerät (1) in der Aufnahmeposition befindet oder nicht, wobei der Ständer (2) eine Reflexionsfläche (20) zur Reflexion von Schallwellen umfasst, die von dem elektronischen Gerät (1) ausgesendet werden, wobei die Reflexionsfläche (20) derart ausgebildet ist, dass sie erste Schallwellen, die dem ersten Tonsignal entsprechen, zumindest teilweise reflektiert, wenn sich das elektronische Gerät in der Aufnahmeposition befindet,
**dadurch gekennzeichnet, dass** die Verarbeitungsmittel (13) dazu geeignet sind, das erste Tonsignal (S1) gemäß ersten Ausgleichsparametern auszugleichen, wenn die Erfassungsmittel (14) erfassen, dass das elektronische Gerät (1) in der Aufnahmeposition ist.

2. System nach Anspruch 1, bei dem die ersten Ausgleichsparameter in Abhängigkeit von geometrischen Eigenschaften des Ständers vordefiniert sind.

3. System nach einem der vorhergehenden Ansprüche, bei dem die Verarbeitungsmittel (13) dazu geeignet sind, das erste Tonsignal (S1) gemäß vordefinierten zweiten Ausgleichsparametern auszugleichen, wenn die Erfassungsmittel (14) nicht erfassen, dass das elektronische Gerät (1) in der Aufnahmeposition ist.

4. System nach einem der vorhergehenden Ansprüche, bei dem das elektronische Gerät (1) ferner ein Empfangsorgan (8) zum Empfangen eines zweiten Tonsignals (S2) umfasst, und bei dem die Verarbeitungsmittel (13) ferner dazu geeignet sind, Korrekturparameter zur Korrektur eines akustischen Echos zu modifizieren, das durch teilweisen Empfang des ersten Tonsignals (S1) durch das Empfangsorgan (8) erzeugt und mit dem zweiten Tonsignal vermischt ist.

5. System nach einem der vorhergehenden Ansprüche, bei dem das Sendeorgan (3) so ausgebildet ist, dass es das erste Tonsignal (S1) durch eine Fläche (4) des elektronischen Geräts (1) aussendet, und bei dem, wenn sich das elektronische Gerät (1) in der Aufnahmeposition befindet, sich die genannte Fläche in einem Abstand zur Reflexionsfläche (20) befindet, der zwischen 2 und 8 Millimeter beträgt.

6. System nach Anspruch 5, bei dem die Reflexionsfläche (20) ungefähr 30 Millimeter breiter als die Fläche (4) des elektronischen Geräts (1) und ungefähr 30 Millimeter länger als die Fläche (4) des elektronischen Geräts (1) ist.

7. Elektronisches Gerät, das ausgebildet ist, um in einer Aufnahmeposition einer Ladebasis zwecks seiner Wiederaufladung mit elektrischer Energie positioniert zu werden, wobei das elektronische Gerät (1) Verarbeitungsmittel (13) umfasst, die mit einem Sendeorgan (3) verbunden sind, um ein erstes Tonsignal (S1) auszusenden, sowie Erfassungsmittel (14), die geeignet sind zu erfassen, ob sich das elektronische Gerät (1) in der Aufnahmeposition befindet oder nicht, **dadurch gekennzeichnet, dass** die Verarbeitungsmittel (13) dazu geeignet sind, das erste Tonsignal (S1) gemäß ersten Ausgleichsparametern auszugleichen, wenn die Erfassungsmittel (14) erfassen, dass das elektronische Gerät (1) in der Aufnahmeposition ist.

8. Elektronisches Gerät nach Anspruch 7, bei dem die ersten Ausgleichsparameter in Abhängigkeit von geometrischen Eigenschaften des Ständers vordefiniert sind.

9. Elektronisches Gerät nach Anspruch 7, bei dem die Verarbeitungsmittel (13) geeignet sind, das erste Tonsignal (S1) gemäß vordefinierten zweiten Ausgleichsparametern auszugleichen, wenn die Erfassungsmittel (14) nicht erfassen, dass das elektronische Gerät (1) in der Aufnahmeposition ist.

10. Elektronisches Gerät nach Anspruch 7, bei dem das elektronische Gerät (1) ferner ein Empfangsorgan (8) zum Empfang eines zweiten Tonsignals (S2) umfasst, und bei dem die Verarbeitungsmittel (13) ferner dazu geeignet sind, Korrekturparameter zur Korrektur eines akustischen Echos zu modifizieren, das durch teilweisen Empfang des ersten Tonsignals (S1) durch das Empfangsorgan (8) erzeugt und mit dem zweiten Tonsignal vermischt wird.

11. Elektronisches Gerät nach Anspruch 7, wobei das elektronische Gerät ein schnurloses Festnetztelefon ist.

## Claims

1. System comprising an electronic device (1) and a support stand (2) intended to receive the electronic device (1) in a received position, the support stand being a charging base which is adapted to recharge the electronic device with electrical energy when the latter is in the received position, the electronic device (1) comprising processing means (13) which are connected to an emitting member (3) to put out a first sound signal (S1), and detecting means (14) adapted to detect whether or not the electronic device (1) is in the received position, the support stand (2) comprising a surface (20) for reflecting acoustic waves put out by the electronic device (1), the reflecting surface (20) being adapted to at least partly reflect first acoustic waves corresponding to the first sound signal when the electronic device is in the received position, **characterised in that** the processing means (13) are adapted to equalise the first sound signal (S1) in accordance with first equalising parameters when the detecting means (14) detect that the electronic device (1) is in the received position.

2. System according to claim 1, wherein the first equalising parameters are predefined as a function of geometrical characteristics of the support stand.

3. System according to one of the preceding claims, wherein the processing means (13) are adapted to equalise the first sound signal (S1) in accordance with second, predefined, equalising parameters when the detecting means (14) do not detect that the electronic device (1) is in the received position.

4. System according to one of the preceding claims, wherein the electronic device (1) also comprises a member (8) for receiving a second sound signal (S2), and wherein the processing means (13) are also adapted to modify parameters for correcting an acoustic echo which is generated by partial reception of the first sound signal (S1) by the receiving member (8) and which is mixed with the second sound signal.

5. System according to one of the preceding claims, wherein the emitting member (3) is adapted to emit the first sound signal (S1) through a face (4) of the electronic device (1), and wherein, when the electronic device (1) is in the received position, said face is situated at a distance of between 2 and 8 millimetres from the reflecting surface (20).

6. System according to claim 5, wherein the reflecting surface (20) is approximately 30 millimetres wider than the face (4) of the electronic device (1) and approximately 30 millimetres longer than the face (4) of the electronic device (1).

7. Electronic device adapted to be positioned in a received position provided by a charging base, for the recharging thereof with electrical energy, the electronic device (1) comprising processing means (13) which are connected to an emitting member (3) to put out a first sound signal (S1), and detecting means (14) adapted to detect whether or not the electronic device (1) is in the received position, **characterised in that** the processing means (13) are adapted to equalise the first sound signal (S1) in accordance with first equalising parameters when the detecting means (14) detect that the electronic device (1) is in the received position.

8. Electronic device according to claim 7, wherein the first equalising parameters are predefined as a function of geometrical characteristics of the support stand.

9. Electronic device according to claim 7, wherein the processing means (13) are adapted to equalise the first sound signal (S1) in accordance with second predefined equalising parameters when the detecting means (14) do not detect that the electronic device (1) is in the received position.

10. Electronic device according to claim 7, wherein the electronic device (1) also comprises a member (8) for receiving a second sound signal (S2), and wherein the processing means (13) are also adapted to modify parameters for correcting an acoustic echo which is generated by partial reception of the first sound signal (S1) by the receiving member (8) and which is mixed with the second sound signal.

11. Electronic device according to claim 7, the electronic device being a wireless home telephone.
